# EUROPÄISCHE PATENTSCHRIFT

(11) **EP 0 778 644 B1**
(45) Veröffentlichungstag und Bekanntmachung des Hinweises auf die Patenterteilung: **29.12.1999**
(21) Anmeldenummer: 96117391.1
(22) Anmeldetag: 30.10.1996
(51) Int. Cl.: H02G 15/04, H02G 3/06, H01R 4/64, H01R 9/05

(54) **Kabelverschraubung für ein abgeschirmtes Kabel**
Cable gland for shielded cable
Presse-étoupe pour câble blindé

(30) Priorität: 07.12.1995 CH 346095
(43) Veröffentlichungstag der Anmeldung: 11.06.1997
(73) Patentinhaber: AGRO AG, CH-5502 Hunzenschwil (CH)
(72) Erfinder: Hablützel, Richard, 8903 Birmensdorf (CH)
(74) Vertreter: Groner, Manfred, Dr.

(56) Entgegenhaltungen:
- EP-A- 0 203 269
- DE-A- 4 403 702
- DE-U- 1 941 740
- FR-A- 2 438 929
- GB-A- 2 126 803
- US-A- 1 922 336
- US-A- 2 057 069
- US-A- 3 292 136
- US-A- 4 979 911

## Beschreibung

Die vorliegende Erfindung bezieht sich auf eine Kabelverschraubung gemäss dem Oberbegriff des Anspruchs 1.

Eine solche Kabelverschraubung ist bekannt. Bei ihr ist das hülsenförmige zweite Teil an einem Ende mit einem ringförmigen Abschnitt versehen, von dem sich zum anderen Ende hin radial symmetrisch verteilte, fingerartige Fortsätze erstrecken. Beim axialen Verspannen des ersten mit dem dritten Teil wird das zweite Teil mit den fingerartigen Fortsätzen voraus axial in eine sich trichterförmig verjüngende Bohrung des ersten Teils geschoben, wobei die freien Enden der Fortsätze konzentrisch in die das Kabel abschirmende Schicht eindringen. Die Fortsatzenden bilden dabei eine sich radial verkleinernde Ringschneide, die in das Kabel eindringt und dieses bei einer zu starken Verspannung des dritten mit dem ersten Teil verletzen kann.

Die US-A-3 292 136 zeigt einen Koaxialstecker mit einer Ringhülse, die einen Schlitz aufweist und an die Aussenseite des Kabels anzulegen ist. Die FR-A-2 438 929 offenbart einen Koaxialstecker, dessen Kabelverschraubung das Kabel durchsetzt. Der elektrische Kontakt zur Abschirmung erfolgt mit einer Ringhülse, um welche das freie Ende der Abschirmung umgelegt wird. Der elektrische Kontakt ist an der Strinseite der Ringhülse vorgesehen. Die Innenseite der Ringhülse liegt an der Aussenseite des Kabelmantels an. Das Umlegen des Aussenleiters ist aufwendig und eine bei Kabelverschraubungen in manchen Fällen unerwünschte Weiterführung der Abschirmung nicht möglich.

Die vorliegende Erfindung stellt sich daher die Aufgabe, eine Kabelverschraubung der eingangs genannten Art derart zu verbessern, dass damit zwischen dem zweiten Teil und der abschirmenden Leiterschicht ohne die Gefahr einer Kabelverletzung ein einwandfreier Kontakt hergestellt werden kann.

Erfindungsgemäss wird diese Aufgabe gelöst durch die kennzeichnenden Merkmale des Anspruchs 1.

Die Erfindung hat den Vorteil, dass die Länge der zylindrischen Kontaktfläche vergleichsweise gross gewählt werden kann, was ein zuverlässiger elektrischer Kontakt und eine kleine radiale Druckspannung bewirkt. Zudem kann durch die erfindungsgemässe Ausbildung des zweiten Teils der Durchmesser der zylindrischen Kontaktfläche einen minimalen Wert nicht unterschreiten, was eine zusätzliche Sicherheit gegen eine Kabelverletzung beim Verschrauben des dritten mit dem ersten Teil bietet.

Anhand der beiliegenden schematischen Zeichnung wird die Erfindung beispielsweise erläutert. Es zeigen:
- Fig. 1: einen Längsschnitt durch eine Kabelverschraubung,
- Fig. 2: eine Abwicklung eines Teils der in Fig. 1 gezeigten Kabelverschraubung,
- Fig. 3: einen Schnitt längs der Linie III-III in Fig. 2 und
- Fig. 4: einen Schnitt längs der Linie IV-IV in Fig. 2.

Die Kabelverschraubung weist im wesentlichen einen ersten Teil 1, einen zweiten Teil 2 und einen dritten Teil 3 auf. Sie dient der abgeschirmten Einführung eines elektrischen Kabels 4 in ein geerdetes Gehäuse 5. Das Kabel 4 ist von einem elektrisch leitenden Drahtgeflechtschlauch 6 und dieser von einem flexiblen Schutzmantel 7 umgeben. Der im wesentlichen als Rotationskörper gestaltete Teil 1 weist eine Bohrung 9 auf, durch die das Kabel 4 hindurch gestossen ist. Die Bohrung 9 bildet gegen den zweiten Teil 2 eine konische Ausweitung 9' in die, wie später beschrieben, der zweite Teil 2 einschiebbar ist. Der erste Teil 1 ist aussen mit einer zur Bohrung 9 koachsialen Ringrippe 10 versehen, an die beidseits je ein Gewinde 11 bzw. 12 anschliesst. Der erste Teil 1 wird für die abgeschirmte Einführung eines Kabels 4 mit seinem Gewinde 11 durch eine Bohrung im Gehäuse 5 geschoben und dann mittels einer nicht dargestellten, auf das Gewinde 11 aufgeschraubten Mutter befestigt. O-Ringe schützen die Kabeleinführung vor Nässe. Zwecks Erdung ist der leitende erste Teil 1 elektrisch leitend mit dem Gehäuse 5 verbunden.

Der dritte Teil 3 ist mit einem Muttergewinde 13 auf das Gewinde 12 des ersten Teils 1 aufschraubbar. Das Muttergewinde schliesst an eine Bohrung 14 an, durch die das Kabel 4 mit dem umgebenden Schutzmantel 7 geschoben ist. Eine an das Muttergewinde 13 anschliessende Ringschulter 15 schiebt während des Aufschraubens des dritten (3) auf den ersten Teil 1 den zweiten Teil 2 axial in die konische Ausweitung 9' der Bohrung 9 hinein.

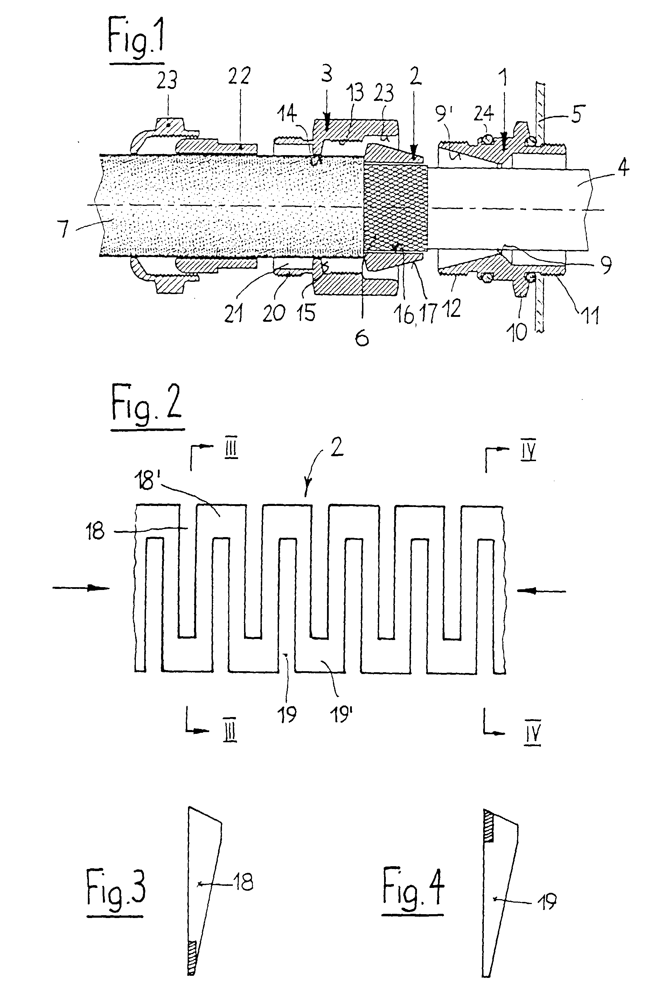

Der zweite Teil 2 ist mit einer zylindrischen Bohrung 16 und einer konischen Mantelfläche 17 versehen, die den gleichen Konuswinkel wie die konische Ausweitung 9' aufweist. Der zweite Teil 2, eine elektrisch leitende Ringhülse, sitzt axial auf einem über den Schutzmantel 7 vorstehenden Abschnitt des Drahtgeflechtschlauchs 6, wobei der Durchmesser der Bohrung 16 etwas kleiner als jener des Schutzmantels 7 ist. Die Wand des zweiten Teils 2 weist abwechselnd von der Vorder- und der Rückseite her Einschnitte 18 bzw. 19 auf, welche Stege 18' und 19' bilden und dem zweiten Teil 2 in der Abwicklung (Fig. 2) eine zickzackartig mäandrierende Form geben. Hierdurch kann sich die zylindrische Bohrung 16 des zweiten Teils 2 bei einem konzentrischen, radialen Kraftangriff - der sich beim Einschub in die konische Ausweitung 9' ergibt - über ihre ganze Länge gleichmässig verkleinern und mit gleichmässiger Druckverteilung gegen den Drahtgeflechtschlauch 6 legen. Die radiale Verkleinerung des zylindrischen Innenquerschnitts des Teils 2 endet, wenn sich die Flanken an den offenen Enden der Einschnitte 18 bzw. 19 berühren.

Für das Herstellen der Kabelverschraubung werden das Kabel 4, der Drahtgeflechtschlauch 6 und der Schutzmantel 7 in der in Fig. 1 gezeigten Weise präpariert. Danach wird der erste Teil 1 am Gehäuse 5 befestigt und der dritte Teil 3 über das Kabelende auf den Schutzmantel 7 geschoben. Danach wird der zweite Teil 2 über das Kabelende auf den vorstehenden Abschnitt des Drahtgeflechtschlauchs 6 aufgesteckt und zwar so, dass seine konisch verjüngte Mantelfläche zum freien Kabelende konvergiert. Danach wird das Kabel 4 soweit durch die Bohrung 9 in das Gehäuse 5 geschoben bis der zweite Teil 2 (gestossen vom Stirnende des Schutzmantels 7) in der konischen Ausweitung 9' liegt. Anschliessend wird der dritte Teil 3 mit seinem Muttergewinde 13 auf das Gewinde 12 des ersten Teils 1 aufgeschraubt und so lange axial verspannt, bis der zweite Teil 2 von der Ringschulter 15 soweit in die konische Ausweitung 9' hineingepresst und dabei radial zusammengedrückt ist, dass er satt auf dem Drahtgeflechtschlauch 6 aufliegt.

Die Kabelverschraubung ist dadurch wasserdicht gestaltet, dass der dritte Teil 3 auf der dem Gehäuse 5 abgewandten Seite einen Gewindekragen 20 aufweist, der um den Schutzmantel 7 einen Ringraum 21 bildet. In diesen Ringraum 21 ist eine Gummihülse 22 schiebbar und mit einer auf den Gewindekragen 20 aufschraubbaren Überwurfmutter 23 axial stauchbar. Während der axialen Stauchung erzeugt die Gummihülse 22 einen gleichmässig radialen Druck auf den Schutzmantel 7 und schützt das Innere des dritten Teils 3 gegen das Eindringen von Wasser von der Rückseite. Gleichzeitig bildet die axial gestauchte Gummihülse 22 eine Ausreissicherung für das Kabel 4.

Der dritte Teils 3 ist mit einer konischen dem Muttergewinde 13 vorangehenden Dichtfläche 23 versehen, die sich, beim axialen Verspannen des dritten (3) mit dem ersten Teil 1 dichtend über einen O-Ring 24 schiebt und eine Wassersperre bildet.

## Patentansprüche

1. Kabelverschraubung für ein abgeschirmtes Kabel (4), welche mindestens einen ersten, einen zweiten und einen dritten Teil (1 bis 3) aufweist, welche Teile je von einer Bohrung durchsetzt und axial auf das Kabel (4) aufschiebbar sind, wobei der erste Teil (1) elektrisch leitend, mit einem Gehäuse (5) verbindbar und mit dem dritten Teil (3) axial verspannbar ist und wobei weiter der zweite Teil (2) elektrisch leitend ist und mit zunehmender axialer Verspannung zwischen dem ersten und dem dritten Teil (1 bzw. 3) den Querschnitt seiner Bohrung verkleinert, dadurch gekennzeichnet, dass sich die Bohrung (9) des ersten Teils (1) gegen den zweiten Teil (2) konisch ausweitet (9'), dass der zweite Teil (2) eine Ringhülse mit sich gegen die konische Ausweitung (9') des ersten Teils (1) konisch verjüngender Mantelfläche (17) und mit zylindrischer Innenfläche (16) ist, welche Innenfläche (16) eine elektrische Kontaktfläche bildet und zum Anlegen an die abschirmende Leiterschicht (6) des Kabels (4) geeignet ist, und dass die Ringhülse in der Abwicklung eine zickzackartig mäandrierende Form aufweist.

2. Kabelverschraubung nach Anspruch 1, gekennzeichnet durch einen vierten und einen fünften, je von einer axialen Bohrung durchsetzten Teil (22, 23), die axial auf ein Kabel (4) aufschiebbar sind, wobei der dritte Teil (3) auf der dem ersten Teil (1) abgewandten Seite mit dem fünften Teil (23) unter gleichzeitiger Kompression des dazwischen liegenden, gummielastischen vierten Teils (22) axial verspannbar ist.

3. Kabelverschraubung nach Anspruch 2, dadurch gekennzeichnet, dass der erste mit dem dritten Teil (1, 3) und der dritte mit dem fünften Teil (3, 23) durch Gewindeverbindungen axial gegeneinander verspannbar ist.

## Claims

1. Cable screwed connection for a screened cable (4), which cable screwed connection has at least a first, a second and a third part (1 to 3), each of which parts is penetrated by a hole and can be pushed axially onto the cable (4), in which arrangement the first part (1) is electrically conducting, can be connected to a casing (5) and can be axially clamped to the third part (3) and in which arrangement, furthermore, the second part (2) is electrically conducting and reduces the cross-section of its hole with increasing axial clamping between the first part and the third part (1 and 3), characterised in that the hole (9) of the first part (1) widens conically (9') towards the second part (2), in that the second part (2) is an annular sleeve having conically contracting outer surface (17) towards the conical widening (9') of the first part (1) and having cylindrical inner surface (16), which inner surface (16) forms an electrical contact surface and is suitable for placing on the screening conducting layer (6) of the cable (4), and in that the developed view of the annular sleeve has a meandering zigzag-type shape.

2. Cable screwed connection according to Claim 1, characterised by a fourth and fifth part (22, 23), which are each penetrated by an axial hole and which can be pushed axially onto a cable (4), in which arrangement the side ofthe third part (3) facing away from the first part (1) can be axially clamped to the fifth part (23) with simultaneous compression of the highly elastic fourth part (22) located between them.

3. Cable screwed connection according to Claim 2, characterised in that the first part and the third part (1, 3) can be axially clamped against one another by means of threaded connections and the third and the fifth parts (3, 23) can be axially clamped against one another by means of threaded connections.

## Revendications

1. Raccord fileté pour un câble blindé (4), qui comporte au moins une première partie, une seconde partie et une troisième partie (1 à 3), lesquelles parties sont traversées chacune par un perçage et peuvent être emmanchées axialement sur le câble (4), et dans lequel la première partie (1) est électriquement conductrice, peut être reliée à un boîtier (5) et peut être serrée axialement par la troisième partie (3), tandis qu'en outre la seconde partie (2) est électriquement conductrice et la section transversale de son perçage diminue lorsque le serrage axial entre les première et troisième parties (1 et 3) augmente, caractérisé en ce que le perçage (9) de la première partie (1) s'élargit (9') avec une forme conique en direction de la seconde partie (2), que la seconde partie (2) est une douille annulaire comportant une surface enveloppe (17) qui se rétrécit avec une forme conique en direction de l'élargissement conique (9') de la première partie (1) et qui possède une surface intérieure cylindrique (16), laquelle surface intérieure (16) forme une surface de contact électrique et convient pour s'appliquer contre la couche de blindage (6) du câble (4), et que la douille annulaire possède, lorsqu'elle est déroulée à plat, une forme sinueuse en zig-zag.

2. Raccord fileté pour câble selon la revendication 1, caractérisé par des quatrième et cinquième parties (22, 23), qui sont traversées chacune par un perçage axial et qui peuvent être emmanchées axialement sur un câble (4), la troisième partie (3) pouvant être serrée axialement sur le côté situé à l'opposé de la première partie (1), par la cinquième partie (23) moyennant une compression simultanée de la quatrième partie (22) qui présente l'élasticité du caoutchouc et est intercalée entre lesdites parties.

3. Raccord fileté pour câble selon la revendication 2, caractérisé en ce que les première et troisième parties (1, 3) peuvent être serrées axialement l'une contre l'autre et les troisième et cinquième parties (3, 23) peuvent être serrées axialement l'une contre l'autre au moyen de systèmes de liaisons filetées.
